# EUROPEAN PATENT APPLICATION

(11) **EP 0 782 309 A2**
(43) Date of publication of application: **02.07.1997**
(21) Application number: 96120764.4
(22) Date of filing: 23.12.1996
(51) Int. Cl.: H04M 1/27, H04M 3/38

(54) **System and method for voice dialing**

(30) Priority: 26.12.1995 US 578362
(71) Applicant: AT&T Corp., New York, NY 10013-2412 (US)
(72) Inventor: Furman, Daniel S., Summit, N.J. 07901 (US); Greenspan, Steven Lloyd, Scotch Plains s.g., N.J. 07076 (US); Rubin, Robert Michael, Morristown, N.J. 07960 (US)
(74) Representative: KUHNEN, WACKER & PARTNER

(57) **Abstract**

A method and system for voice dialing is initiated by an originating caller. The call has an associated call discriminator and is forwarded to a predetermined switch in response to the associated discriminator. The switch queries a network database in response to the discriminator. The database includes a plurality of telephone numbers having identifying indicia corresponding to respective voice prints associated with destination telephone numbers. The query compares a voice print of the originating caller with the voice prints stored in the database and the call is completed by switching the call to the destination telephone number if the originating caller voice print matches a stored database voice print.

## Description

### FIELD OF THE INVENTION

This application relates to a system and method for voice dialing by comparing a voice print from an originating caller with a stored voice print in a network database.

### BACKGROUND OF THE INVENTION

In the modem telephone age, many telephone services have become commonplace and their use have become a standard way of doing business. Some network telephone services include call forwarding, call waiting, video transfer and other voice and data services. These telephone services enhance business services for a customer. However, in some instances even more enhanced services are desired. For example an originating caller may have a database of different numbers in an electronic rolodex or stored in the premises phone. It is often inefficient for the originating caller to locate in a manual rolodex or premises database the name of a person, the directory assistance of a city, or company telephone number. It is also unwieldy to store many telephone numbers in one premises rolodex.

Many companies now market add-on units to telephones that include a storage unit for holding a large list of potential destination numbers. These numbers can be readily accessed through a keypad or other means. The units are placed in a premises, and typically their maintenance and upkeep are responsibility of the premises owner.

It would be desirable if an originating caller could more efficiently connect to a destination number without using add-on or modified premises equipment.

### SUMMARY OF THE INVENTION

The present invention now allows a method and system for voice dialing without the use of additional or modified premises equipment. A plurality of destination telephone numbers having identifying indicia corresponding to a voice print are stored within a database of a switched telephone network. The originating caller speaks their name, and the database is queried. The voice print of the originating caller is compared with stored voice prints. The call is switched to the destination telephone number associated with a stored voice print when the voice print matches a voice print stored within the database.

In one aspect of the present invention, a call is switched from an originating caller to a predetermined switch when the call includes a predetermined call discriminator. In response, a query to the database is triggered.

In another aspect of the present invention, an announcement can be played to the originating caller requesting at least one spoken word. This spoken word is converted to a voice print. This voice print is compared with the voice prints stored within the database to determine the destination number. In still another aspect of the present invention, an announcement can be played to the originating caller requesting that caller to enter a personal identification number. This ensures that only those originating callers who are subscribers use the system.

Voice prints can be created within the database by querying an originating caller for names and switching the call from the originating caller into an intelligent processor, which cooperates with the database to store within the database a preselected destination telephone number having a voice print associated therewith. The destination number can be preselected by entering a predetermined dual tone multi-frequency (DTMF) sequence corresponding to the destination telephone number. At least one word can be spoken for associating a spoken name with a voice print of the destination telephone number.

The voice print can correspond to the directory assistance of a predetermined city and state or it can correspond to a company name. The voice print can also correspond to the name of an individual. The predetermined call discriminator can comprise a cut-through code so that the call can be placed through the local exchange company into the network. This call discriminator can comprise a selected 800 number sequence.

### BRIEF DESCRIPTION OF THE DRAWINGS

The foregoing and other objects and advantages of the present invention will be appreciated more fully from the following description, with reference to the accompanying drawings in which:
Figure 1 is a simplified block diagram of a telephone network including the intelligent network components suitable for use with the present invention.
Figure 2 is a block diagram of the platform for a Service Control Point.
Figure 3 is a high level flowchart showing a method of the present invention.

### DETAILED DESCRIPTION OF THE INVENTION

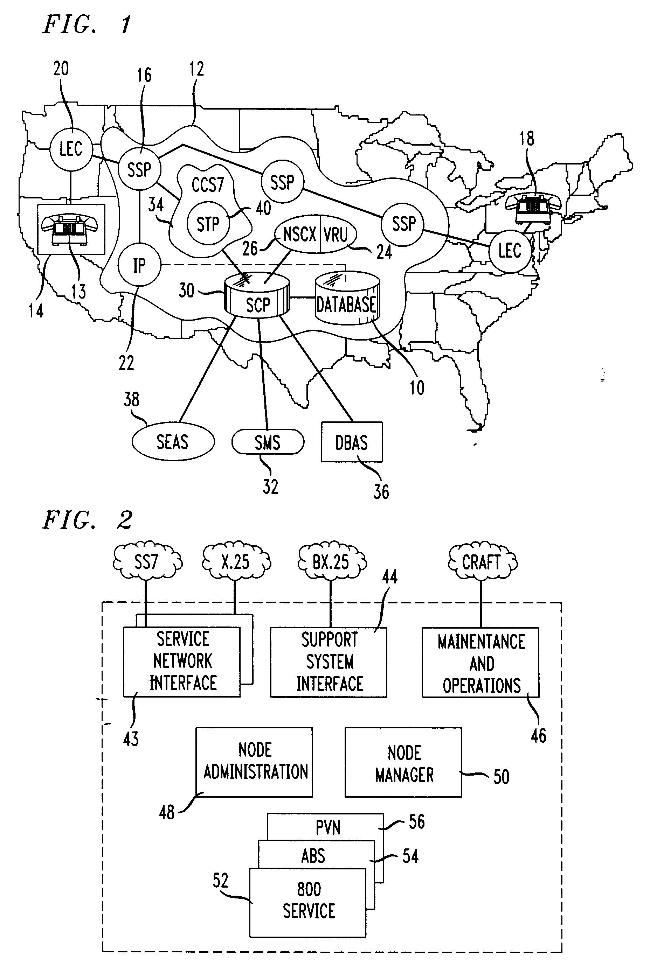

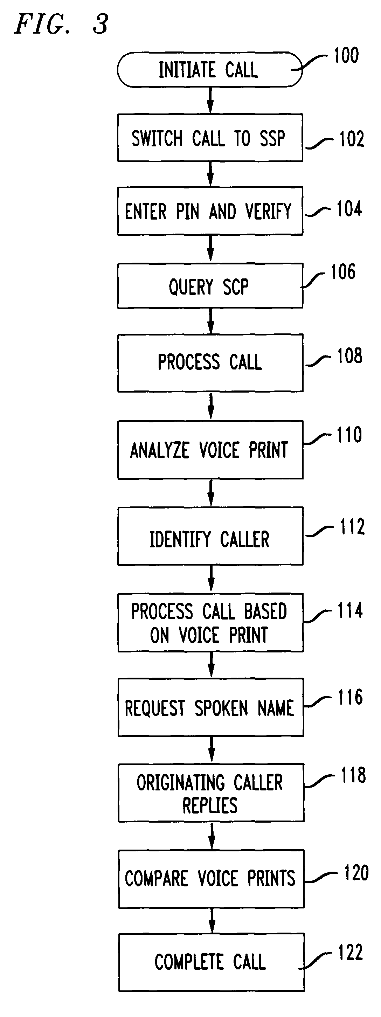

A method and system for voice dialing a destination party is disclosed in Figure 1 and the flowchart of Figure 3. In accordance with the present invention, the method and system for voice dialing is provided as an "intelligent" service in which a database **10** contained within a switched telephone network **12** stores a plurality of telephone numbers having identifying indicia corresponding to a voice print associated with a destination telephone number. An originating call is switched from an originating caller **13** located at a premises **14** through the network **12** to a predetermined switch, such as a network service switching point (SSP) **16**. This switch **16** determines if the call has a "trigger," typically a predetermined call discriminator. The database **10** is queried when the call includes a voice print associated with a spoken word received from the originating caller party. The call is switched to the destination telephone number at a destination party **18** when the originating caller **13** voice print matches a stored voice print within the database **10**.

At a high level, call processing according to the present invention involves three steps: (1) collecting information about the originating caller **13** and the call, (2) processing the collected information to determine if the database **10** containing the voice prints and destination numbers should be queried, and (3) executing call processing instructions such as switching the call to the destination telephone number. Several illustrative implementations are described below for each of these three steps, but one skilled in the art will appreciate that other variations and different combinations of the implementations as well as other high level steps can be used without departing from the spirit of the invention.

In an information collection step, the switched telephone network **12** collects information about the caller such as an associated discriminator, which could be a personal identification number. Typically, the originating caller **13** initiates a call from the premises **14**. The call could have an associated calling discriminator, such as a cut-through code selected 800 number sequence, and an additional personal identification number. If the call includes a personal identification number, the network identifies the originating caller and allows enhanced phone services in accordance with the present invention.

If an originating caller **13** has an authorized personal identification number, and a proper discriminator, such as a cut-through code for entering the network through a local exchange carrier (LEC) **20**, the call is switched to a respective Service Switching Point **16**, which determines if the call includes a voice print associated with the destination telephone number. In the illustrated embodiment, the Service Switching Point **16** includes system hardware and software, as well as an associated intelligent processor **22**, and changes the analog voice signal into a digital voice print that can be analyzed and compared with the stored voice prints in the database **10**. The Service Switching Point **16** queries the database **10** for various voice prints, compares the retrieved voice prints with that of the originating caller **13**, and switches the call to the destination party **18** when a respective voice print has been matched.

The network **12** can also identify the originating caller **13**. The network **12** may request the originating caller **13** to enter a personal identifier such as the personal identification number (PIN) represented by dual tone multi-frequency (DTMF) digits, or a spoken identifier, such as a name, which the network recognizes using speech recognition software and hardware in a voice response unit (VRU) **24**, which could be part of a Network Service Complex (NSCX) **26**. The network may collect a speech sample and use well-known voice recognition techniques to determine the identity of the originating caller and identify if the originating caller is a subscriber to the voice dialing system of the present invention. When collecting information about the caller, the network can play an announcement such as generated by the VRU **24** requesting that the originating caller **13** enter a DTMF code or state a name for names analysis.

Additionally, in one aspect of the present invention, the network **12** can determine if a call discriminator is present for switching the call through a Local Exchange Carrier (LEC) **20** to the respective Service Switching Point (SSP) **16** for querying the database **10**. This discriminator can comprise an 800 number with appropriate ANI or a break-through code for allowing the call to go through the Local Exchange Carrier **20** into the network. Examples include the conventional (10 ATT) break-through code.

It is useful at this point to describe in general manner the key intelligent network elements that can be used to implement the present invention. Intelligent network systems suitable for implementing the invention, in view of this disclosure, are well-known in the art and are commercially available from AT&T Corp. ("AT&T") under the A-I-NetÔ advanced intelligent network family of products.

The intelligent network architecture superimposes on an existing telecommunication system a modular configuration of network elements to enhance telecommunications services. As noted before, the intelligent network includes a Service Switching Point (SSP) **16**, as well as a Service Control Point (SCP) **30**, and a Service Management System (SMS) **32**. An intelligent processor **22** can be associated with the Service Switching Point **16**. One skilled in the art will appreciate that the intelligent network elements could be owned or controlled either by a Local Exchange Carrier (LEC) or an Interexchange Carrier (IXC), or by both. Typically, if the intelligent network elements as described are owned by an IXC and separate from the LEC, the call discriminator above may include appropriate cut through codes or comprise an 800 number for switching through the LEC to the IXC network.

The Service Switching Point **22** recognize service requests, and requests call handling instructions from a Service Control Point **30**. It executes those instructions to complete the telephone call. These instructions can be stored program switches, such as end offices or access tandem offices that interface with the CCS7 signaling network **34**. They have appropriate software and service logic to interact through the signaling network with the Service Control Point **30**. The Service Switching Point **16** allows intelligent network "triggering", i.e., detecting a condition that requires the Service Switching Point **16** to initiate the intelligent network service by sending a query to a Service Control Point **30**.

As described below, the method and system for voice dialing in accordance with the present invention has its own "trigger profile," or set of data that assigns the service a unique point of entry into the intelligent network functions. The Service Switching Point **16** also formulates and transmits requests to the Service Control Point **30** and processes replies and requests from the Service Control Point. The Service Control Point **30** creates and plays intelligent network announcements by a Network Services Complex (NSCX) **26** via the service provider (e.g., the local exchange or interexchange carrier). It transmits messages and announcements to the Service Control Point **30** and to the originating caller **13**. The Service Switching Point can be an AT&T 5ESS switch provisioned with AT&T's A-I-NetÔ intelligent software to provide functionality.

The Service Control Point **30** is an intelligent network element that stores call control and call routing instructions executed by the Service Switching Point **16**. The Service Control Point **30** receives requests from the Service Switching Point **16** and determines the destination telephone number. The Service Control Point **30** receives and processes event messages from the Service Switching Point and formulates and sends responses to the Service Switching Point The Service Control Point **30** can process accounting and statistical information, such as the number of the calling party, the dialed intelligent network number, duration and type of ringing tone call waiting signals, and other similar call parameters. The Service Control Point **30** interfaces with and receives commands from controlling services and service features of the Services Management System (SMS) **32**. The Service Control Point **30** in accordance with the present invention can be an AT&T A-I-NetÔ Service Control Point.

In one aspect of the present invention, the Service Control Point **30** interfaces with the network **12** using a plurality of 56 kb/s SS7 links or 9.6 kb/s or 56 kb/s X.25 links. It can interface with operations support systems such as Services Management System **32**, Data Base Administration System **36**, and the Signal Engineering and Administration Center **38** using duplicated 9.6 kb/s BX.25 links. The SEAC **38** allows operational and administrative support for Signal Transfer Points **40** that make up the CCS7 network **34**. The SEAC **38** contains routing information used by Signal Transfer Points **40** such as six-digit or NPA-XXX translations used for routing a query to a Service Control Point **30**. It also updates STP routing, grows SS7 links, or collects message data and traffic.

The Service Control Point **30** accommodates growth. Processing power or memory can be added to an in-service Service Control Point without interrupting service. It is also accommodates retrofit, allowing new software to be loaded without disrupting service.

One type of hardware environment for a Service Control Point **30** that could be used for the present invention includes a set of front-end processors for SS7 protocol processing such as the Message Transfer Part and the Signaling Connection Control Part. These front-end processors use a dual-ethernet configuration with Central Processor Units in the back end. These Central Processor Units perform the SS7 application layer protocol processing referred to as the Transaction Capabilities Application Part as well as the appropriate query processing. For some applications, the data required to handle queries is stored in the CPU main memory, and for other applications data resides in a disk subsystem. The Central Processor Units could share a disk system which is accessed through a duplicated bus interfacing with dual disk controllers. These could support a community of dual-ported shadowed disks.

During normal operation, the Central Processing Units are processing traffic. However, if one or more processors fail, the remaining processors can still handle full traffic volume during the busy hour through productive redundancy or load sharing. In another type of active/standby system, a standby processor is idle until a failure occurs in the active unit. The standby is then switched into service.

The architecture of one type Service Control Point software is illustrated in Figure 2 and shows six major subsystems. Three of the subsystems are interfaces. The Service Network Interface (SNI) **43** has System 7 protocol software -- Message Transfer Part, Signaling Connection Control Part, and Transaction Capabilities Application Part, or the equivalent for the X.25 protocol. The Support System Interface (SSI) **44** contains BX.25 protocol software and link recovery software for the interface with the Service Management System. The Maintenance and Operations Console (MOC) **46** subsystem has a craftsperson interface with color graphics, windowing, and icons.

The Node Administration subsystem **48** contains administrative tables and measurements data and the like. The Node Manager **50** has fault recovery and diagnostic software and is used for start up and shut down, and support growth and retrofit without service interruption. It can detect a problem with a process or data, and can accomplish an escalating sequence of recovery actions until the problem is cleared.

These five subsystems can comprise the Service Control Point platform. Service application software is written to run on that platform using an Application Programming Interface (API). The SCP software can support multiple applications, and application software has been written and deployed for 800 Service **52**, Alternate Billing Services (ABS) **54**, and Private Virtual Network (PVN) **56**.

The Services Management System **32** is a management and provisioning system that serves as an intelligent network service administration platform. The Services Management System **32** formulates and sends commands to the Service Control Point **30** to control services and service features. The Services Management System illustratively is an AT&T A-I-NetÔ Service Management System.

The Intelligent Processor **22** is associated with a Service Switching Point **16** and has specialized functionality, such as a voice response unit **24** for speech recognition (identifying spoken words) and voice recognition (recognizing the voice of a particular speaker) capability. The Intelligent Processor not only recognizes words, but also changes the analog signal into a digital voice print. The Intelligent Processor **22** also may perform the functions of a video signal generator or video signal database to provide images for call waiting signals with video telephone calls.

The Intelligent Processor **22** can be part of a separate network element, or may be part of a multi-media Service Control Point (SCP). Other services for the Intelligent Processor **22** may include voice digit dialing and voice recognition for authenticating the identity of an individual as well as other services. Intelligent Processor equipment suitable for use with the present invention are well known in the art of intelligent network systems.

In accordance with the present invention, the system includes "triggering", i.e., a Service Switching Point **16** determines when a query message requesting call processing instructions will be sent to a Service Control Point **30**. For example, the call can include predetermined discriminators, such as a cut-through code and certain NPA or 800 number for switching the call to a predetermined Service Switching Point and "triggering" a query to a Service Control Point.

In accordance with the present invention, the database voice prints can be stored by interaction with the premises phone **14**. The originating caller **13** could initially desire to store a plurality of different telephone numbers within the database **10**. The originating caller **13** typically can create a voice print in the database by calling a predetermined number such as an 800 number. The call can be switched to the respective Services Switching Point **16**. A Network Announcement Facility (NSCX) **26** associated with the Service Control Point generates an announcement asking for a destination telephone number that includes the standard NPA-XXX- format. The originating caller then responds by dialing a desired touch tone sequence. After the network receives the destination telephone number and stores it in the database, the Network Announcement Facility **26** then queries for one or more words (which could be limited by four words) corresponding to a desired name, company, or other information such as a specialized directory assistance. The name is converted from analogue to digital with the help of the Intelligent Processor **22** and stored as an associated data group and "voice print" of the destination telephone number.

This process is repeated as many times as necessary to form a database for that particular originating caller **13**. The originating caller **13** typically would be a subscriber to this network service. Once the database is complete, the originating caller **13**, as subscriber to this network system, can make the appropriate calls to activate the voice dialing system of the present invention. The verification as subscriber could be a personal identification number (PIN) or other means.

In accordance with the present invention, the method for using voice dialing system is described with reference to the flow chart of Figure 3. The originating caller initiates a call from the premises phone (Block **100**). The call has an associated calling discriminator to switch the call to the Service Switching Point having an associated Intelligent Processor (Block **102**). The calling discriminator can be an 800 number or a cut-through code. At the same time, the Network Services Complex (NSCX) can generate an announcement requesting the calling party to enter an identification such as a PIN (personal identification number) to determine and verify that the calling party is a subscriber to the service (Block **104**). The Service Switching Point can forward the digits in a query to the Service Control Point (Block **106**) which determines the appropriate call processing on the basis of caller-provided information (Block **108**). The process then proceeds to step **116**. Alternately, the switch also may utilize the Intelligent Processor to collect and analyze the caller's voice print for identification (Block **110**). The Intelligent Processor could then return to the switch, an indication of the originating caller's identity on the basis of the voice print (Block **112**) and the switch could provide this information to the Service Control Point for further instructions on call processing (Block **114**). The NSCX then can request a spoken name (Block **116**) and the originating caller replies (Block **118**).

The originating caller voice print is then compared with those stored in the database (Block **120**). If a match is found, the call is then switched to a destination number having the stored voice print matching the voice print of the originating caller so as to complete the call (Block **122**).

It is to be understood that the above description is only one preferred embodiment of the invention. Numerous other arrangements may be devised by one skilled in the art without departing from the spirit and scope of the invention.

## Claims

1. A method for voice dialing comprising
storing a plurality of telephone numbers within a database contained within a switched telephone network, the plurality of telephone numbers having identifying indicia corresponding to a voice print associated with a destination telephone number,
querying the database when the call includes a voice print received from an originating caller and comparing the voice print of the originating caller with stored voice prints, and
switching the call to the destination telephone number associated with a stored voice print when the voice print of the originating caller matches a respective stored voice print within the database.

2. The method according to claim 1 including the step of including speaking at least one word by the originating caller for associating a voice print with the destination telephone number.

3. The method according to claim 1 wherein the voice print corresponds to a directory assistance of a city and state.

4. The method according to claim 1 wherein the voice print corresponds to a company name.

5. The method according to claim 1 wherein the voice print corresponds to the name of an individual.

6. A method for voice dialing comprising
initiating a call by an originating caller at a calling station, the call having an associated call discriminator,
responsive to the associated discriminator, forwarding the call to a predetermined switch and triggering a query to a database in response to the associated discriminator, the database having a plurality of telephone numbers, each having identifying indicia corresponding to a voice print associated with a destination telephone number,
querying the database when the originating caller includes a voice print to determine a match of the calling party voice print with a voice print stored in the database, and
completing the call by switching the call to the destination telephone number associated with a stored voice print when the originating caller voice print matches a respective voice print stored within the database.

7. The method according to claim 6 including the steps of playing an announcement to the originating caller, requesting at least one spoken word, converting the spoken word to a voice print, and comparing the voice print with the voice prints stored within the database.

8. The method according to claim 6 including the step of playing an announcement to the originating caller requesting a personal identification number.

9. The method according to claim 6 including the steps of creating voice prints within the database by querying a party for words, and storing within the database a preselected destination telephone number having a voice print associated therewith.

10. The method according to claim 9 including the step of preselecting the destination number by entering a predetermined dual tone multi-frequency (DTMF) sequence corresponding to the destination number.

11. The method according to claim 9 including the step of speaking at least one word for associating a spoken name with a voice print of the destination telephone number.

12. The method according to claim 6 wherein the voice print corresponds to a directory assistance of a predetermined city and state.

13. The method according to claim 6 wherein the voice print corresponds to a company name.

14. The method according to claim 6 wherein the voice print corresponds to the name of an individual.

15. The method according to claim 6 wherein the predetermined call discriminator comprises a cut-through code corresponding to a predetermined dual tone multifrequency signal for switching the originating caller call through a local exchange carrier to a network switch.

16. The method according to claim 15 wherein the predetermined call discriminator comprises a selected 800 number sequence for switching the originating call to a selected network switch.

17. A telephone system for voice dialing comprising
a switched network for forwarding a telephone call from an originating caller party to a destination party,
a database contained within the switched network and having stored therein a plurality of telephone numbers, each telephone number having a voice print associated therewith,
means for querying the database when the call has a predetermined discriminator to compare a voice print of an originating caller with a voice print stored in the database to locate a destination telephone matching the voice print received from the originating caller, and
means for switching the call to the destination telephone number of a matching voice print when the originating caller voice print matches the respective stored voice print.

18. The system according to claim 17 including an announcement manager within the telephone network for playing to the originating caller an announcement requesting a voice print.

19. The system according to claim 17 including an announcement manager within the network for playing an announcement to the originating caller requesting a personal identification number from the originating caller, and processing means within the network for receiving the personal identification number and approving the calling party based on the personal identification number.

20. The system according to claim 17 wherein the voice print corresponds to a directory assistance of a predetermined city and state.

21. The system according to claim 17 wherein the voice print corresponds to a company name.

22. The system according to claim 17 wherein the voice print corresponds to the name of an individual.

23. The system according to claim 17 wherein the predetermined call discriminator comprises a cut-through code corresponding to a predetermined dual tone multi frequency signal for switching the originating call through a local exchange carrier to a network switch.

24. The system according to claim 17 wherein the call discriminator comprises a selected 800 number sequence for switching the originating call to a selected network switch.
